# EUROPEAN PATENT APPLICATION

(11) **EP 4 186 598 A1**
(43) Date of publication of application: **31.05.2023**
(21) Application number: 22208420.4
(22) Date of filing: 18.11.2022
(51) Int. Cl.: B05B 7/00

(54) **A DEVICE AND METHOD FOR APPLYING A LIQUID FILM TO SURFACES IN AN AREA**

(30) Priority: 19.11.2021 BE 202105895
(71) Applicant: Bandit, 3660 Opglabbeek (BE)
(72) Inventor: VANDONINCK, Alfons, 3660 Opglabbeek (BE)
(74) Representative: Gevers Patents

(57) **Abstract**

The invention provides a device (100) for applying a liquid film to surfaces in an area. The device (100) comprises a head (110) for discharging a flow of liquid droplets (200) in a discharge direction (D). The device (100) is arranged for rotating the head (110) according to two rotational degrees of freedom to move the discharge direction (D) through the area. The device (100) comprises a distance sensor (120) for measuring a distance (d) between the head (110) and surfaces in the area along the discharge direction (D). The device (100) is configured according to at least one of a first and second configuration. In the first configuration a rotational speed of the head (110) is adjustable as a function of the distance (d) measured by the distance sensor (120). In the second configuration a flow rate of the flow of liquid droplets from the head (110) is adjustable as a function of the distance (d) measured by the distance sensor (120).

## Description

### Technical field

The present invention relates to a device for applying a liquid film to surfaces in an area, such as for example a room. Furthermore, the present invention also relates to a method for applying a liquid film to surfaces in an area.

### Background art

An area, such as for example a room, can be treated or disinfected by applying a liquid film containing an active ingredient on the surfaces in the area, such as for example wall surfaces of the area and surfaces of objects in the area. The active ingredient may for example be a biocide, a pesticide, a virucide, a fungicide, an insecticide, a probiotic or an antibiotic. The liquid film is preferably evenly distributed over all the surfaces in the area, such that all the surfaces receive an equal and sufficient treatment.

It is known from the state of the art that the liquid film can be applied on surfaces in an area by an operator present in the area by means of a spraying device, such as for example a pressure sprayer, which discharges from a spraying head in a discharge direction a flow of liquid droplets containing the active ingredient. To apply the liquid film, the operator moves the spraying head around such that the discharge direction and thereby the discharged flow of liquid droplets is directed to the different surfaces in the area. The operator can thereby make sure that the liquid film is evenly distributed over all the surfaces in the area, such that all the surfaces receive an equal and sufficient treatment.

This does however have the disadvantage that the operator is exposed to the active ingredient, which is in many cases hazardous to the health of the operator. The operator may wear protective gear to avoid exposure to the active ingredient, but such protective gear is cumbersome and time consuming to put on and take off. And even with the protective gear there might still be a risk of the operator being exposed to the active ingredient, for example in case of a tear in the protective gear or by taking off the protective gear without the necessary care.

Alternatively, a device can be used which is arranged for applying a liquid film to surfaces in an area autonomously without the presence of an operator. Such devices do however have the disadvantage that they cannot evenly distribute the liquid over the surfaces in the area.

### Disclosure of the invention

It is an aim of the present invention to provide a device and method for applying a liquid film to surfaces in an area, which is able to apply the liquid film over to the surfaces in the area such that the liquid film is evenly distributed over the surfaces in the area, and to do this autonomously for improved safety.

This aim is achieved according to the invention with a device for applying a liquid film to surfaces in an area showing the technical characteristics of the first independent claim, and with a method for applying a liquid film to surfaces in an area showing the technical characteristics of the second independent claim.

Therefore the present invention provides a device for applying a liquid film to surfaces in an area, such as for example a room. The device comprises a head provided for discharging a flow of liquid droplets in a discharge direction. The device is arranged for rotating the head according to two rotational degrees of freedom to move the discharge direction through the area. Preferably, the head is thereby rotatable around a rotation centre located within the head. The device comprises a distance sensor for measuring a distance between the head and surfaces in the area along the discharge direction. The device is configured according to at least one of a first configuration and a second configuration. In the first configuration a rotational speed, preferably at least one rotational speed, of the head is adjustable. In the first configuration the device is arranged to adjust the rotational speed, preferably the at least one rotational speed, of the head as a function of the distance measured by the distance sensor. In the second configuration a flow rate of the flow of liquid droplets from the head is adjustable. In the second configuration the device is arranged to adjust the flow rate of the flow of liquid droplets from the head as a function of the distance measured by the distance sensor.

The device according to the present invention offers the advantage that depending on the distance between the head and the surface in the area to which the head is pointing with the discharge direction, the amount of liquid droplets which is discharged towards said surface is adjustable. In the device configured according to the first configuration this is done by adjusting the rotational speed of the head. In this way the flow of liquid droplets discharged from the head can be directed for a long or short time towards the surface, such that for the same flow rate of the flow of liquid droplets respectively more or less of the liquid droplets are discharged towards the surface. In the device configured according to the second configuration this is done by adjusting the flow rate of the flow of liquid droplets from the head, such that for the same rotational speed of the head more or less of the liquid droplets can be discharged towards the surface. In the device configured according to both the first configuration and the second configuration this is done by adjusting one or both of the rotational speed of the head and the flow rate of the flow of liquid droplets from the head.

In this way more liquid droplets can be discharged towards surfaces which are far away from the head, for which surfaces the chance that all the liquid droplets discharged from the head reach said surfaces is small because of the large distance, and less liquid droplets can be discharged to surfaces which are close to the head, for which surfaces the chance that all the liquid droplets discharged from the head reach the surface is large because of the short distance. In this way all the surfaces in the area, independent of their distance to the head, will receive an equal amount of the liquid droplets, such that the liquid film is evenly distributed over all the surfaces in the area.

In an embodiment of the device according to the present invention the device is arranged in the first configuration to respectively increase or decrease the rotational speed of the head with a decrease or increase of the distance measured by the distance sensor. In the second configuration, the device is arranged to respectively increase or decrease the flow rate of the flow of liquid droplets from the head with an increase or decrease of the distance measured by the distance sensor.

In an embodiment of the device according to the present invention the device is arranged in the first configuration to adjust the rotational speed of the head such that the discharge direction sweeps between the head and surfaces in the area an equal predetermined surface area during equal predetermined time intervals when the head is rotated.

In an embodiment of the device according to the present invention the head is rotatable around a height direction. The head is rotatable around a transverse direction. The transverse direction is transverse to the height direction and transverse to the discharge direction.

In an embodiment of the device according to the present invention at least one of a first rotational speed of the head around the height direction and a second rotational speed of the head around the transverse direction is adjustable in the first configuration. The device is arranged to adjust the at least one rotational speed of the head as a function of the distance measured by the distance sensor.

In an embodiment of the device according to the present invention the device comprises a support. The support is rotatable around the height direction. The head is mounted on the support such that the head is rotatable around the height direction together with the support. The head is mounted on the support such that the head is rotatable around the transverse direction.

In an embodiment of the device according to the present invention the head comprises a supply opening at a first end of the head in the discharge direction. The head comprises a discharge opening at a second end of the head in the discharge direction opposite of the first end of the head. The head comprises a suction device arranged for sucking an airflow into the head from the supply opening to the discharge opening. The head comprises a nebulizer arranged for adding the liquid droplets to the airflow through the head.

In an embodiment of the device according to the present invention the suction device is arranged for sucking the airflow into the head from the supply opening to the discharge opening at an adjustable speed in the second configuration for adjusting the flow rate of the flow of liquid droplets from the head. In an embodiment of the device according to the present invention the nebulizer is arranged for adding the liquid droplets to the airflow through the head with an adjustable flow rate in the second configuration for adjusting the flow rate of the flow of liquid droplets from the head.

In an embodiment of the device according to the present invention the suction device is arranged for sucking the airflow into the head from the supply opening to the discharge opening such that the airflow flows out of the head in the discharge direction at a speed of at least 5 m/s, preferably at least 10 m/s, more preferably at least 15 m/s, and/or of at most 35 m/s, preferably at most 30 m/s, more preferably at most 25 m/s, even more preferably at most 20 m/s, and most preferably of 18 m/s.

The airflow out of the head having a speed in the given range is beneficial to assure that the airflow is a laminar flow. In this way undesirable turbulences are avoided and the time between the discharge of liquid droplets from the head and the contacting of the liquid droplets to the surface is kept in an optimal range. It has been found that the airflow speeds mentioned herein assure that liquid droplets splash open when contacting the surface and provide an even wetting of the surface. Furthermore, the airflow speeds mentioned herein prevent significant evaporation of the liquid droplets before contacting the surfaces in the area. Additionally, in embodiments wherein the liquid droplets are discharged from the head with a surplus or a deficit in electron charge with respect to ground, the airflow speeds mentioned herein assure that a sufficient charge is maintained during the travel of liquid droplets from the head to the surfaces.

In an embodiment of the device according to the present invention the suction device is one of an axial fan, a radial fan, a mixed flow fan and a turbine.

In an embodiment of the device according to the present invention the head comprises guiding fins for guiding the airflow through the head. Preferably, the guiding fins are curved guiding fins.

The guiding fins are beneficial for guiding the airflow through the head in a smooth manner to assure that the airflow is a laminar flow. In this way undesirable turbulences are avoided and the time between the discharge of liquid droplets from the head and the contacting of the liquid droplets to the surface is kept in an optimal range. It has been found that the airflow speeds mentioned herein assure that liquid droplets splash open when contacting the surface and provide an even wetting of the surface. Furthermore, the airflow speeds mentioned herein prevent significant evaporation of the liquid droplets before contacting the surfaces in the area. Additionally, in embodiments wherein the liquid droplets are discharged from the head with a surplus or a deficit in electron charge with respect to ground, the airflow speeds mentioned herein assure that a sufficient charge is maintained during the travel of liquid droplets from the head to the surfaces.

In an embodiment of the device according to the present invention the nebulizer is one of a nebulizing rotating disc or cup, a nozzle and a vibration nebulizer.

In an embodiment of the device according to the present invention the nebulizer is arranged for adding the liquid droplets to the airflow through the head at a flow rate of at least 0,05 l/min, preferably at least 0,1 l/min, more preferably at least 0,2 l/min, even more preferably at least 0,3 l/min, yet even more preferably at least 0,4 l/m, and/or of at most 50 l/min, preferably at most 25 l/min, more preferably at most 10 l/min, even more preferably at most 5 l/min, yet even more preferably 1 l/min, and most preferably of 0.5 I/min.

In an embodiment of the device according to the present invention the liquid droplets have a size of at least 0,5 µm, preferably at least 10 µm, more preferably at least 20 µm, even more preferably at least 40 µm, yet even more preferably at least 80 µm, and/or of at most 5000 µm, preferably at most 2000 µm, more preferably at most 1000 µm, even more preferably at most 500 µm, yet even more preferably at most 200 µm, and most preferably of 100 µm.

In an embodiment of the device according to the present invention the liquid droplets are discharged out of the head with a surplus or a deficit in electron charge with respect to ground.

This embodiment offers the advantage that the electrostatically charged liquid droplets are attracted to the surfaces in the area for a good application of the liquid film to said surfaces. More in particular, the electrostatically charged droplets allow the droplets to reach and wet surfaces that are not oriented towards the head. For example, it has been found that if the device is used in a room wherein a screen is present, not only the screen surface oriented towards the device, but also the opposite, back surface of the screen is wetted. Electrostatically charged liquid droplets flow over and by the side of the screen and are attracted to the back surface, thereby wetting that surface as well.

In an embodiment of the device according to the present invention the liquid droplets comprise at least one active ingredient selected from the list consisting of a biocide, a pesticide, a virucide, a fungicide, an insecticide, a probiotic and an antibiotic.

In an embodiment of the device according to the present invention the distance sensor is configured to measure the distance by means of electromagnetic waves or sound waves. Preferably the electromagnetic waves are light waves or microwaves. More preferably, the electromagnetic waves are laser light waves. Preferably, the sound waves are ultrasound waves.

In an embodiment of the device according to the present invention the distance sensor is attached to the head to rotate with the head.

This embodiment offers the advantage that the distance sensor automatically moves together with the head when the head is being rotated to move the discharge direction through the area, such that the distance sensor is always correctly positioned for measuring the distance between the head and the surface in the area to which the discharge direction is pointing.

Furthermore, the present invention also provides a method for applying a liquid film to surfaces in an area, such as for example a room, by means of the device according to the present invention. The method comprises a first step of rotating the head to move the discharge direction through the area. Thereby, the distance sensor is rotated with the head for measuring the distance between the head and surfaces in the area with the distance sensor for the different positions of the discharge direction. The method comprises discharging a flow of liquid droplets in the discharge direction from the head, either during the first step of rotating the head to move the discharge direction through the area, or during a second step of rotating the head to move the discharge direction again through the area. Thereby, the rotational speed of the head is adjusted as a function of the distance measured by the distance sensor during the first step of rotating the head in the first configuration, and the flow rate of the flow of liquid droplets from the head is adjusted as a function of the distance measured by the distance sensor during the first step of rotating the head in the second configuration.

Furthermore, the present invention provides methods as described herein, wherein the device is stationary in relation to the surfaces in the area during the method. In particular, the device may comprise a support that is stationary in relation to the surfaces in the area during the method. Thus, according to a particular embodiment, the present invention provides the methods described herein, wherein the device is positioned at a predetermined position in the area.

In an embodiment of the method according to the present invention the step of discharging the flow of liquid droplets in the discharge direction from the head is performed during the first step of rotating the head to move the discharge direction through the area.

In a preferred embodiment, the method comprises a first step of measuring the distance between the head and the surfaces as described herein and a second step of discharging liquid droplets as described herein. Performing a first step of measuring the distance and a second step of discharging avoids that discharged liquid droplets interfere with distance measurements.

### Brief description of the drawings

The invention will be further elucidated by means of the following description and the appended figures.
Figure 1 shows a perspective view of a device according to an embodiment of the present invention.
Figure 2 shows a cross section through the head of the device of Figure 1.

### Modes for carrying out the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

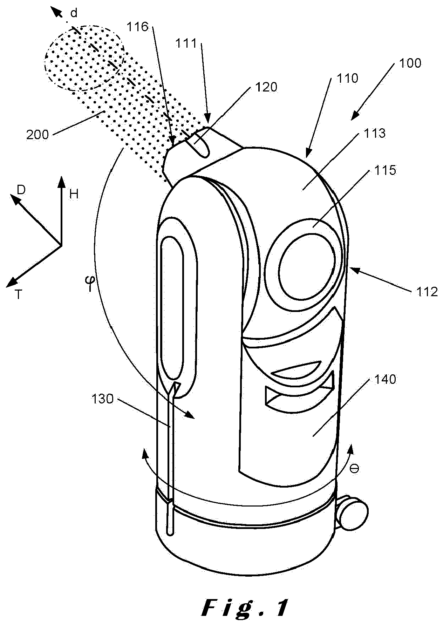

Figure 1 shows a device 100 according to an embodiment of the present invention for applying a liquid film to surfaces in an area. The area may for example be a room. The surfaces may for example be wall surfaces of the area and surfaces of objects in the area. The device 100 comprises a head 110 that is provided for discharging a flow of liquid droplets 200 in a discharge direction D. The head 110 is mounted on a support 130 of the device 100. On the support 130 there is provided a reservoir 140 for the liquid which is used for applying the liquid film by means of the device 100.

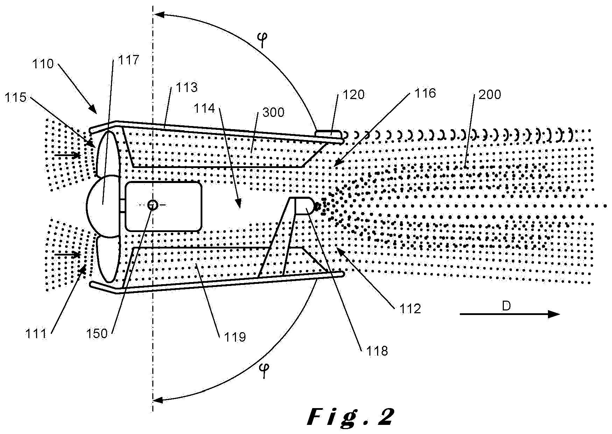

The head 110, as shown in further detail in Figure 2, comprises a housing 113 which encloses an internal volume 114 of the head 110. At a first end 111 in the discharge direction D the housing 113 of the head 110 is provided with a supply opening 115 leading into the internal volume 114. At a second end 112 in the discharge direction D, opposite of the first end 111 in the discharge direction d, the housing 113 of the head 110 is provided with a discharge opening 116 leading out of the internal volume 114.

Inside the internal volume 114 the head 110 is provided at the supply opening 115 with a suction device 117 that is arranged for sucking an air flow 300 into the internal volume 114 of the head 110 via the supply opening 115. This airflow 300 is further directed through the internal volume 114 towards the discharge opening 116, and out of the discharge opening 116 along the discharge direction D.

Preferably, the suction device 117 is arranged for sucking the airflow 300 into the head 110 from the supply opening 115 to the discharge opening 116 such that the airflow 300 flows out of the head 110 in the discharge direction D at a speed of at least 5 m/s, preferably at least 10 m/s, more preferably at least 15 m/s, and/or of at most 35 m/s, preferably at most 30 m/s, more preferably at most 25 m/s, even more preferably at most 20 m/s, and most preferably of 18 m/s.

In the embodiment shown, the suction device 117 is an axial fan, but in alternative embodiments any other suitable type of suction device 117 known to the skilled person can be used, such as for example a radial fan, a mixed flow fan or a turbine.

Optionally, the head 110 can be provided with guiding fins 119 inside the internal volume 114, preferably curved guiding fines 119, on the inner surface of the housing 113 following the suction device 117 in the discharge direction D. These guiding fins 119 aid in guiding the airflow 300 through the internal volume 114 from the suction device 117 to the discharge opening 116.

Inside the internal volume 114, the head 110 is provided at the discharge opening 116 with a nebulizer 118 that is arranged for adding liquid droplets 200 to the airflow 300 passing through the internal volume 114 of the head 110 to form the flow of liquid droplets 200 that is discharged out of the head 110 in the discharge direction D.

Preferably, the nebulizer 118 is arranged for adding the liquid droplets 200 to the airflow 300 through the head 110 at a flow rate of at least 0,05 l/min, preferably at least 0,1 l/min, more preferably at least 0,2 l/min, even more preferably at least 0,3 l/min, yet even more preferably at least 0,4 l/m, and/or of at most 50 l/min, preferably at most 25 l/min, more preferably at most 10 l/min, even more preferably at most 5 l/min, yet even more preferably 1 l/min, and most preferably of 0.5 I/min.

Preferably, the liquid droplets 200 have a size of at least 0,5 µm, preferably at least 10 µm, more preferably at least 20 µm, even more preferably at least 40 µm, yet even more preferably at least 80 µm, and/or of at most 5000 µm, preferably at most 2000 µm, more preferably at most 1000 µm, even more preferably at most 500 µm, yet even more preferably at most 200 µm, and most preferably of 100 µm.

Preferably, the nebulizer 118 is arranged for electrostatically charging the liquid droplets 200, such that the liquid droplets 200 are discharged out of the head 110 with a surplus or a deficit in electron charge with respect to ground. Arranging the nebulizer for electrostatically charging the liquid droplets has been found to be particularly convenient, although the skilled person is aware of other possibilities for electrostatically charging liquid droplets, which is also within the scope of the invention. Electrostatically charging the liquid droplets 200 has the advantage that the liquid droplets 200 are attracted to the surfaces in the area for a good application of the liquid film to said surfaces by means of the device 100.

Preferably, the liquid droplets 200 comprise at least one active ingredient selected from the list consisting of a biocide, a pesticide, a virucide, a fungicide, an insecticide, a probiotic and an antibiotic.

The nebulizer 118 may for example be a nebulizing disc, a nozzle, or a vibration nebulizer, but any other suitable type of nebulizer 118 known to the skilled person can be used.

The device 100 is arranged such that the head 110 is rotatable according to two rotational degrees of freedom to be able to move the discharge direction D of the head through the area. Therefore, the support 130 on which the head 110 is mounted, is arranged such that the support 130 is rotatable around a height direction H along an azimuth angle θ. The head 110 is mounted on the support 130 in such a way that the head 110, and thus also the discharge direction D of the head 110, rotates together with the with the support along the height direction H along the azimuth angle θ, i.e. the first rotational degree of freedom. The head 110 is also mounted on the support 130 such that the head 110, and thus also the discharge direction D of the head 110, is tiltable or rotatable around a transverse direction T along an inclination angle ϕ, i.e. the second rotational degree of freedom. Thereby, this transverse direction T is perpendicular to both the height direction H and the discharge direction D. Preferably, the rotation centre 150 of the head 110 is located within the internal volume 114 of the head, such as shown in Figure 2.

On top of the housing 113 the head 110 is provided at the discharge opening 116 with a distance sensor 120. The distance sensor 120 is configured for measuring along the discharge direction D a distance d between the head 110 and a surface in the area to which the head 110 is pointing with the discharge direction D. The distance sensor 120 is attached to the head 110 such that, when the head 110 is rotated for moving the discharge direction D through the area, the distance sensor 120 will move together with the head 110 for measuring the distance d along the discharge direction D.

The distance sensor 120 may be configured to measure the distance d between the head 110 and a surface in the area by means of electromagnetic waves or sound waves which are transmitted by the distance sensor 120 in the discharge direction D and reflected on the surface back to the distance sensor 120, where the reflected electromagnetic or sound waves are detected. The time which has passed between the transmittal of the electromagnetic or sound wave and the detection of the reflected electromagnetic or sound wave can then be used to determine the distance d between the head 110 and the surface. The electromagnetic waves may for example be microwaves or light, such as laser light, and the sound waves may for example be ultrasound waves.

To be able to evenly distribute the liquid film over the surfaces in an area, the device 100 is configured according to at least one of a first configuration and a second configuration.

In the first configuration the device 100 is arranged in such a way that a rotational speed of the head 110 is adjustable. Said rotational speed may be a first rotational speed of the head 110 around the height direction H, i.e. along the azimuth angle θ. Said rotational speed may also be a second rotational speed of the head 110 around the transverse direction T, i.e. along the inclination angle ϕ. Said rotational speed may also be both the first rotational speed and the second rotational speed. The device 100 is thereby arranged to adjust said rotational speed as a function of the distance d measured by the distance sensor 120. Thereby, the device 100 is configured to increase said rotational speed when the distance d between the head 110 and surfaces in the area decreases, and vice versa to decrease said rotational speed when the distance d between the head 110 and surfaces in the area increases. This may for example be done by adjusting the rotational speed of the head 110 in such a way that the discharge direction D sweeps between the head 110 and surfaces in the area, i.e. over the distance d, an equal predetermined surface area during equal predetermined time intervals when the head is rotated. As such, the device 100 will take a longer time to apply a liquid film on surfaces in the area which are further away from the head 110 than to surfaces in the area which are closer to the head 110. This is beneficial because with an increased distance d from the head 110 the chance of the liquid droplets 200 that are being discharged from the head 110 reaching the target surface decreases. Moving the head 110 slower for surfaces which are further away will then make sure that those further surfaces receive an equal amount of the liquid droplets 200 as surfaces which are closer by. As such the liquid film is evenly distributed over all the surfaces in the area.

In the second configuration the device 100 is arranged in such a way that a flow rate of the flow of liquid droplets from the head 110 is adjustable. This may for example be done by providing the suction device 117 of the head 110 for sucking the airflow 300 into the head 110 from the supply opening 115 to the discharge opening 116 at an adjustable speed, and/or by providing the nebulizer 118 for adding the liquid droplets 200 to the airflow 300 through the head 110 with an adjustable flow rate. The device 100 is thereby arranged to adjust the flow rate of the flow of liquid droplets 200 from the head 110 as a function of the distance d measured by the distance sensor 120. Thereby, the device 100 is configured to increase the flow rate of the flow of liquid droplets 200 from the head 110 when the distance d between the head 110 and surfaces in the area increases, and vice versa to decrease the flow rate of the flow of liquid droplets 200 from the head 110 when the distance d between the head 110 and surfaces in the area decreases. This is beneficial because with an increased distance d from the head 110 the chance of the liquid droplets 200 that are being discharged from the head 110 reaching the target surface decreases. Increasing the flow rate of the flow of liquid droplets 200 being discharged from the head 110 for surfaces which are further away will then make sure that those further surfaces receive an equal amount of the liquid droplets 200 as surfaces which are closer by. As such the liquid film is evenly distributed over all the surfaces in the area.

For applying a liquid film to surfaces in an area, such as a room, the device 100 can be used as follows.

First, the device 100 is positioned in the area by an operator, preferably as centrally as possible. Then, the operator makes sure that all the devices in the area which have a fan, such as for example a personal computer, a copy machine, airconditioner, etc. are turned off, because the fan might disturb the process of applying the liquid film on the surfaces in the area by means of the device 100. Then, the operator makes sure that any openings to the area, such as doors or windows are closed before leaving the area.

After this has been done the device 100 is started. This may for example be done remotely by the operator via an application on a mobile phone or other suitable computing device. This may also be done by the operator activating the device 100 when the operator is still present in the area, and the device automatically starting after a predetermined time which allows the operator to leave the area in time.

After the device 100 is started, the head 110 is rotated around the transverse direction T to a horizontal position, i.e. such that the discharge direction D is located in a horizontal plane, and this without the head 110 discharging a flow of liquid droplets 200 in the discharge direction D. Thereafter, the head 110 is rotated full circle around the height direction H, i.e. over 360° of the azimuth angle θ, to move the discharge direction D through the area, and this also without the head 110 discharging a flow of liquid droplets 200 in the discharge direction D. While the head 110 is being rotated around the height direction H, the distance sensor 120, which moves together with the head 110, measures at predetermined intervals, for example of 1° azimuth angle θ, the distance d between the head 110 and a surface in the area to which the head 110 and thus the discharge direction D is pointing. The measured distances d are stored in a memory of the device 100 for later use.

In the next step, the head 110 is rotated again full circle around the height direction H, i.e. over 360° of the azimuth angle θ, to move the discharge direction D through the area, but this time with the head 110 discharging a flow of liquid droplets 200 in the discharge direction D for applying a liquid film on the surfaces in the area along said full circle. In the first configuration of the device 100, a rotational speed of the head 110, in this case the first rotational speed, is thereby adjusted, as described in further detail above with respect to the first configuration, as a function of the previously measured distances d to evenly distribute the liquid film on the surfaces in the area along said full circle. In the second configuration of the device 100, the flow rate of the flow of liquid droplets 200 from the head 110 is thereby adjusted, as described in further detail above with respect to the second configuration, as a function of the previously measured distances d to evenly distribute the liquid film on the surfaces in the area along said full circle. Alternatively, this step may be performed together with the previous step of rotating the head 110 full circle around the height direction H, in which case the instantaneously measured distances d would be used for adjusting the rotational speed of the head 110 in the first configuration of the device 100, and for adjusting the flow rate of the flow of liquid droplets 200 from the head 110 in the second configuration of the device 100.

The abovementioned steps of measuring the distances d to the surfaces in the area and applying the liquid film to the surfaces in the area, are then repeated for different inclination angles ϕ of the head 110 above and below the horizontal plane until the liquid film is applied to all the surfaces in the area. This may for example be done in intervals of 20° of the inclination angle ϕ. It should hereby also be noted that it is not preferably to rotate the head 110 straight down, since there the support 130 is located, to which no liquid film has to be applied.

It should be noted that the head 110 can also be rotated in other ways to move the discharge direction D through the entire area. One option, for example, is to rotate the head 110 first almost full circle around the transverse direction T, i.e. over almost 360° of the inclination angle ϕ, taking into account the presence of the support 130 to which no liquid film has to be applied. This rotation of the head 110 is then repeated at different intervals of the azimuth angle θ of the head 110. Another option, for example, is to rotate the head 110 simultaneously around the height direction H and the transverse direction T, and this in such a way that the discharge direction D is moved along a spherical spiral.

After the liquid film has been applied to the surfaces in the entire area, the applied liquid film is given a predetermined period, for example half an hour, to dry. Thereby, the device 100 can be used to speed up the drying of the liquid film, by moving the head 110 around while it discharges only an airflow 300. If the predetermined period has lapsed, the device 100 informs the operator, for example via an application on a mobile phone or other suitable computing device, that the procedure has finished and that it is safe to enter the room.

### References

- 100: device
- 110: head
- 111: first end
- 112: second end
- 113: housing
- 114: internal volume
- 115: supply opening
- 116: discharge opening
- 117: suction device
- 118: nebulizer
- 119: guiding fin
- 120: distance sensor
- 130: support
- 140: reservoir
- 150: rotation centre
- 200: liquid droplets
- 300: airflow
- D: discharge direction
- H: height direction
- T: transverse direction
- d: distance
- θ: azimuth angle
- ϕ: inclination angle

## Claims

1. A device (100) for applying a liquid film to surfaces in an area, the device (100) comprising:
a head (110) provided for discharging a flow of liquid droplets (200) in a discharge direction (D), wherein the device (100) is arranged for rotating the head (110) according to two rotational degrees of freedom to move the discharge direction (D) through the area; and
a distance sensor (120) for measuring a distance (d) between the head (110) and surfaces in the area along the discharge direction (D);
wherein the device (100) is configured according to at least one of a first configuration and a second configuration,
wherein in the first configuration a rotational speed of the head (110) is adjustable, and the device (100) is arranged to adjust the rotational speed of the head (110) as a function of the distance (d) measured by the distance sensor (120), and
wherein in the second configuration a flow rate of the flow of liquid droplets (200) from the head (110) is adjustable, and the device (100) is arranged to adjust the flow rate of the flow of liquid droplets (200) from the head (110) as a function of the distance (d) measured by the distance sensor (120).

2. The device (100) according to claim 1, wherein in the first configuration, the device (100) is arranged to respectively increase or decrease the rotational speed of the head (110) with a decrease or increase of the distance (d) measured by the distance sensor (120), and wherein in the second configuration, the device (100) is arranged to respectively increase or decrease the flow rate of the flow of liquid droplets (200) from the head (110) with an increase or decrease of the distance (d) measured by the distance sensor (120).

3. The device according to claim 1 or 2, wherein in the first configuration, the device (100) is arranged to adjust the rotational speed of the head (110) such that the discharge direction (D) sweeps between the head (110) and surfaces in the area an equal predetermined surface area during equal predetermined time intervals when the head (110) is rotated.

4. The device (100) according to any one of claims 1-3, wherein the head (110) is rotatable around a height direction (H), and wherein the head (110) is rotatable around a transverse direction (T) transverse to the height direction (H) and transverse to the discharge direction (D); and
wherein optionally in the first configuration at least one of a first rotational speed of the head (110) around the height direction (H) and a second rotational speed of the head (110) around the transverse direction (T) is adjustable, and the device (100) is arranged to adjust the at least one rotational speed of the head (110) as a function of the distance (d) measured by the distance sensor (120).

5. The device (100) according to claim 4 , wherein the device (100) comprises a support (130), wherein the support (130) is rotatable around the height direction (H), wherein the head (110) is mounted on the support (130) such that the head (110) is rotatable around the height direction (H) together with the support (130), and wherein the head (110) is mounted on the support (130) such that the head (110) is rotatable around the transverse direction (T).

6. The device (100) according to any one of claims 1-5, wherein the head (110) comprises:
a supply opening (115) at a first end (111) of the head (110) in the discharge direction (D);
a discharge opening (116) at a second end (112) of the head (110) in the discharge direction (D) opposite of the first end (111) of the head (110);
a suction device (117) arranged for sucking an airflow (300) into the head (110) from the supply opening (115) to the discharge opening (116), such as a suction device (117) selected from an axial fan, a radial fan, a mixed flow fan, and a turbine;
a nebulizer (118) arranged for adding the liquid droplets (200) to the airflow (300) through the head (110), such as a nebulizer (118) selected from a nebulizing disc, a nebulizing cup, a nozzle and a vibration nebulizer; and
optionally guiding fins (119), preferably curved guiding fins (119), for guiding the airflow (300) through the head (110).

7. The device (100) according to claim 6, wherein in the second configuration:
the suction device (117) is arranged for sucking the airflow (300) into the head (110) from the supply opening (115) to the discharge opening (116) at an adjustable speed;
and/or wherein the nebulizer (118) is arranged for adding the liquid droplets (200) to the airflow (300) through the head (110) with an adjustable flow rate,
for adjusting the flow rate of the flow of liquid droplets (200) from the head (110).

8. The device (100) according to claim 6 or7, wherein the suction device (117) is arranged for sucking the airflow (300) into the head (110) from the supply opening (115) to the discharge opening (116) such that the airflow (300) flows out of the head (110) in the discharge direction (D) at a speed of at least 5 m/s, preferably at least 10 m/s, more preferably at least 15 m/s, and/or of at most 35 m/s, preferably at most 30 m/s, more preferably at most 25 m/s, even more preferably at most 20 m/s, and most preferably of 18 m/s.

9. The device (100) according to any one of claims 1-8, wherein the nebulizer (118) is arranged for adding the liquid droplets (200) to the airflow (300) through the head (110) at a flow rate of at least 0,05 l/min, preferably at least 0,1 l/min, more preferably at least 0,2 l/min, even more preferably at least 0,3 l/min, yet even more preferably at least 0,4 l/m, and/or of at most 50 l/min, preferably at most 25 l/min, more preferably at most 10 l/min, even more preferably at most 5 l/min, yet even more preferably 1 l/min, and most preferably of 0.5 I/min.

10. The device (100) according to any one of claims 1-9, wherein the liquid droplets (200) have a size of at least 0,5 µm, preferably at least 10 µm, more preferably at least 20 µm, even more preferably at least 40 µm, yet even more preferably at least 80 µm, and/or of at most 5000 µm, preferably at most 2000 µm, more preferably at most 1000 µm, even more preferably at most 500 µm, yet even more preferably at most 200 µm, and most preferably of 100 µm.

11. The device (100) according to any one of claims 1-10, wherein the liquid droplets (200) are discharged out of the head (110) with a surplus or a deficit in electron charge with respect to ground.

12. The device (100) according to any one of claims 1-11, wherein the liquid droplets (200) comprise at least one active ingredient selected from the list consisting of a biocide, a pesticide, a virucide, a fungicide, an insecticide, a probiotic and an antibiotic.

13. The device (100) according to any one of claims 1-12, wherein the distance sensor (120) is configured to measure the distance (d) by means of electromagnetic waves or sound waves.

14. The device (100) according to any one of claims 1-13, wherein the distance sensor (120) is attached to the head (110) to rotate with the head (110).

15. A method for applying a liquid film to surfaces in an area by means of the device (100) according to any one of claims 1-14, wherein the method comprises:
a first step of rotating the head (110) to move the discharge direction (D) through the area, and thereby rotating the distance sensor (120) with the head (110) for measuring the distance (d) between the head (110) and surfaces in the area with the distance sensor (120) for the different positions of the discharge direction (D);
discharging a flow of liquid droplets (200) in the discharge direction (D) from the head (110), either during the first step of rotating the head (110) to move the discharge direction (D) through the area, or during a second step of rotating the head (110) to move the discharge direction (D) again through the area, and thereby:
in the first configuration adjusting the rotational speed of the head (110) as a function of the distance (d) measured by the distance sensor (120) during the first step of rotating the head (110); and
in the second configuration adjusting the flow rate of the flow of liquid droplets (200) from the head (110) as a function of the distance (d) measured by the distance sensor (120) during the first step of rotating the head (110);
wherein preferably the step of discharging the flow of liquid droplets (200) in the discharge direction from the head (110) is performed during the first step of rotating the head (110) to move the discharge direction through the area.
